# FASCICULE DE BREVET EUROPEEN

(11) **EP 0 838 683 B1**
(45) Date de publication et mention de la délivrance du brevet: **02.01.2003**
(21) Numéro de dépôt: 97402412.7
(22) Date de dépôt: 14.10.1997
(51) Int. Cl.: G01P 3/44, G01P 3/487

(54) **Dispositif de codeur pour capteur de vitesse de rotation et roulement équipé d'un tel dispositif**
Kodiervorrichtung für Drehgeschwindigkeitsmessaufnehmer sowie Wälzlager damit
Encoder device for rotational speed sensor and roller bearing equipped with such a device

(30) Priorité: 23.10.1996 FR 9612895
(43) Date de publication de la demande: 29.04.1998
(73) Titulaire: SKF FRANCE, F-92142 Clamart Cédex (FR)
(72) Inventeur: Message Olivier, 37000 Tours (FR); Landrieve Franck, 37230 Fondettes (FR)
(74) Mandataire: Casalonga, Axel

(56) Documents cités:
- EP-A- 0 213 732
- EP-A- 0 726 468
- FR-A- 2 718 499
- GB-A- 2 298 490

## Description

L'invention concerne un dispositif de codeur pour palier à roulement, dans lequel un organe tournant du palier porte ledit codeur constitué par un anneau à aimantation multipolaire destiné à générer un champ magnétique variable devant un capteur solidaire d'un élément fixe. Un tel dispositif permet de déterminer la vitesse de rotation de l'élément tournant supportant le codeur. De tels dispositifs trouvent leur application dans de nombreux domaines tels que les moteurs électriques dans lesquels ils sont amenés à fonctionner dans des conditions sévères de vitesse et de température. L'anneau multipolaire est généralement réalisé en matière thermoplastique chargée de particules magnétisées (plasto-aimant) et constitue la partie active du codeur.

On prévoit un support métallique ayant pour fonction d'une part de supporter le codeur, et d'autre part d'assurer la solidarisation du codeur avec l'élément tournant dont on veut mesurer la vitesse de rotation. L'anneau multipolaire est souvent surmoulé directement sur le support métallique au moyen d'un moulage par injection dans un moule contenant le support métallique.

Ce type de codeur dont la partie active est réalisée avec un plasto-aimant comporte toutefois certains inconvénients, notamment à haute vitesse et haute température.

En effet, le plasto-aimant est constitué par un mélange de particules magnétisées, relativement denses, particules de ferrites par exemple, et d'un liant constitué d'un matériau synthétique avec une proportion de particules par rapport au total de la masse de la partie active de l'ordre de 80 à 90% afin d'obtenir une magnétisation suffisante pour la génération d'un signal correct au niveau du capteur. Un tel plasto-aimant possède un module d'élasticité faible et est donc relativement cassant.

Dans les codeurs conventionnels, l'emmanchement du codeur sur une portée cylindrique extérieure crée dans l'anneau multipolaire des contraintes de traction mal supportées par le matériau.

On connaît par la demande de brevet français n° 2 718 499, un codeur dont la partie active est montée sur un support métallique par l'intermédiaire d'une couche de caoutchouc, le support métallique étant emmanché sur la bague tournante d'un roulement. La couche de caoutchouc évite la transmission de la totalité de la déformation du support. Toutefois, elle ne permet pas d'éviter l'apparition de contraintes nuisibles dans la partie active du codeur dans certaines conditions de vitesse et de température.

Dans les applications à haute vitesse, par exemple 10.000 à 30.000 t/minute pour un diamètre de 50 à 120 mm, le plasto-aimant avec lequel est réalisé l'anneau est soumis à des contraintes internes importantes dues à la force centrifuge à laquelle sont soumises les particules magnétiques. Ce phénomène peut être aggravé par la température qui, si elle est trop élevée, a deux effets néfastes sur le plasto-aimant. Premièrement, la température dégrade les propriétés mécaniques du liant et, deuxièmement, les dilatations différentielles entre le plasto-aimant avec lequel est réalisé l'anneau et le support métallique de l'anneau ont tendance à désolidariser radialement l'anneau de son support.

La présente invention a donc pour objet de remédier aux inconvénients des dispositifs ci-dessus et également de proposer un codeur dont l'emmanchement sur la portée qui le supporte ne génère pas de contraintes de traction dans la partie active.

Le dispositif de codeur, revendiqué s'apparente à l'état de la technique connu de EP-A-213 732 en ce qu'il est destiné à un capteur de vitesse de rotation d'un organe tournant d'un palier monté sur un organe non tournant dudit palier, du type comprenant un capteur solidaire d'un élément fixe par rapport à l'organe non tournant et devant lequel défile en rotation et avec un faible entrefer un élément formant rotor muni d'un codeur magnétique capable de produire dans le capteur un signal périodique de fréquence proportionnelle à la vitesse de rotation de l'élément rotor, le codeur comprenant une partie active annulaire réalisée avec un plasto-aimant et pourvue d'une zone active disposée pour défiler en regard du capteur. Le codeur comprend selon l'invention, une partie de renforcement composée de deux éléments annulaires disposés en contact avec la partie active, de chaque côté de la zone active. Les éléments annulaires peuvent ainsi reprendre les efforts radiaux internes qui se développent dans la partie active et limiter l'apparition de contraintes de traction dans ladite partie active. Un tel codeur est capable de supporter de fortes accélérations radiales, notamment à haute température.

Dans un mode de réalisation de l'invention, chaque élément annulaire s'étend entre la zone active et une face radiale du codeur, la zone active étant cylindrique. Les éléments annulaires peuvent affleurer la zone active.

Dans un mode de réalisation de l'invention, les éléments annulaires sont réalisés en matériau amagnétique et possèdent un module d'élasticité élevé et un coefficient de dilatation faible par rapport à ceux de la partie active du codeur. Ainsi, les éléments annulaires peuvent limiter très fortement les déformations de la partie active du codeur qui résulteraient des efforts d'emmanchement du codeur sur sa portée ou d'une dilatation du codeur sous l'effet de la température.

Qui plus est, lorsque la partie active du codeur aura tendance à se dilater, elle viendra serrer à l'intérieur des éléments annulaires et il se créera ainsi au sein du plasto-aimant des contraintes de compression qui éviteront toute fissuration du matériau.

Dans un mode de réalisation de l'invention, les éléments annulaires sont en forme de coupelle à section en L.

Dans un autre mode de réalisation de l'invention, les éléments annulaires ont une section sensiblement rectangulaire.

Avantageusement, le dispositif de codeur comprend un support destiné à être emmanché sur une portée de l'élément formant rotor. Le support est en général métallique et peut être prévu de façon à ne pas déformer la partie active du codeur lors de l'emmanchement ou lors d'une dilatation de l'élément formant rotor. Le support peut être monobloc avec l'un des éléments annulaires.

La partie active du codeur peut être surmoulée sur les éléments annulaires. Dans une variante, les éléments annulaires peuvent être collés sur la partie active du codeur ou encore emmanchés sur ladite partie active du codeur.

L'invention a également pour objet un palier à roulement équipé d'un codeur pour dispositif de détection de la vitesse de rotation de sa bague tournante par rapport à sa bague non tournante, le codeur étant tel que décrit plus haut.

Grâce à l'invention, on obtient un codeur stable mécaniquement même à haute température tout en restant simple et de fabrication économique.

L'invention sera mieux comprise à l'étude de la description détaillée de quelques modes de réalisation de l'invention pris à titre d'exemples nullement limitatifs et illustrés par les dessins annexés, sur lesquels :
la figure 1 est une vue en coupe axiale d'un palier à roulement équipé d'un codeur selon un premier mode de réalisation de l'invention;
la figure 2 est une vue partielle du codeur de la figure 1;
la figure 3 est une vue partielle en coupe axiale d'un codeur selon un second mode de réalisation de l'invention; et
la figure 4 est une vue partielle en coupe axiale d'un codeur selon un troisième mode de réalisation de l'invention.

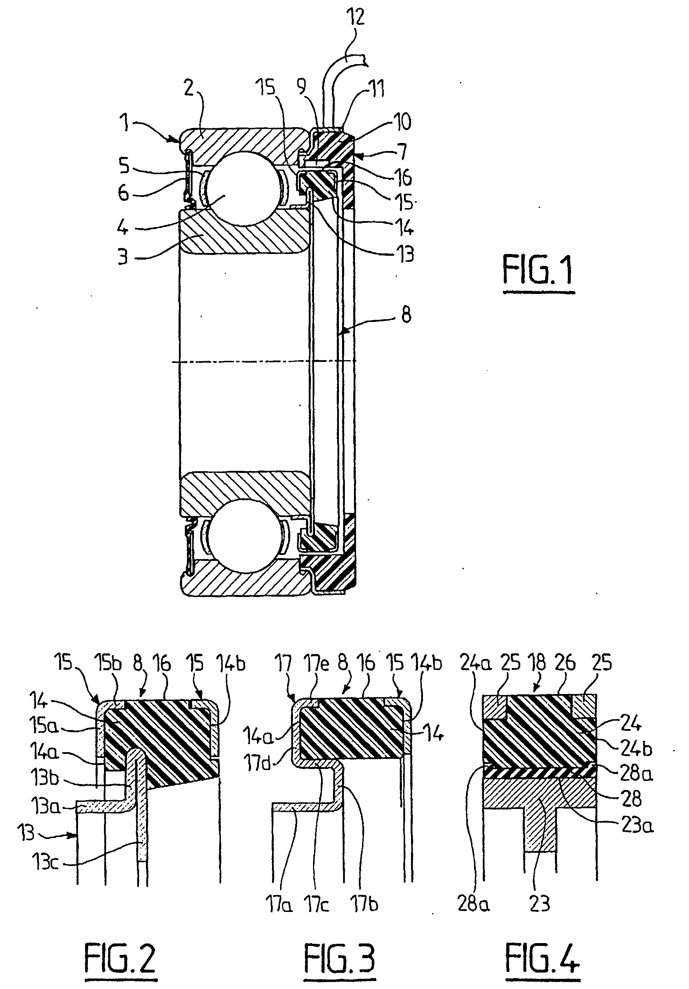

Tel qu'il est illustré sur la figure 1, le palier à roulement 1 comprend une bague extérieure 2, une bague intérieure 3, une rangée de billes 4 disposées entre la bague extérieure 2 et la bague intérieure 3 et maintenues par une cage 5, un joint d'étanchéité 6 sur l'un de ses côtés, et sur le côté opposé, un capteur de vitesse 7 solidaire de la bague extérieure 2 et un codeur 8 solidaire de la bague intérieure 3.

Le capteur 7 comprend une partie de détection 9 sensible aux variations de champ magnétique, par exemple une sonde à effet Hall, un bloc-support 10 en matériau synthétique, et un élément métallique 11 emmanché sur une portée de la bague extérieure 2. Un câble 12 relié à la partie de détection 9 permet de transmettre une information de vitesse à des moyens de calcul non représentés.

Le codeur 8 (figures 1 et 2) comprend un support 13 métallique, une partie active 14 réalisée avec un plasto-aimant et deux éléments annulaires 15 de renforcement. Le support 13 comprend une partie tubulaire 13a emmanchée sur une portée de la bague intérieure 3. Une première partie radiale 13b s'étendant à partir d'une extrémité de la portion tubulaire 13a vers l'extérieur et une deuxième portion radiale 13c s'étendant à partir de la première portion radiale 13b vers l'intérieur. Les portions radiales 13b et 13c sont en contact mutuel. Le support 13 peut être formé par découpe et emboutissage d'un flan de tôle. L'extrémité de petit diamètre de la deuxième portion radiale 13c peut venir en butée contre le bord de la bague intérieure 3 de façon à positionner précisément le codeur 8 par rapport à la bague intérieure 3 lors de l'emmanchement.

La partie active annulaire 14 est surmoulée sur le support 13 et est en contact avec les extrémités de grand diamètre des portions radiales 13b et 13c. La surface cylindrique extérieure de la partie active 14 forme la zone active 16 qui est disposée en regard et avec un faible entrefer vis-à-vis du capteur 7.

Les éléments annulaires 15 sont identiques et montés symétriquement de part et d'autre de la partie active 14. Chaque élément annulaire 15 est en forme de coupelle à section en L et comprend une portion radiale 15a en contact avec les bords 14a, 14b de la partie active 14, et une partie cylindrique 15b en contact avec la partie active 14 et affleurant la zone active 16. Afin de ne pas perturber le champ magnétique créé par la partie active 14, les deux éléments annulaires 15 sont réalisés en métal amagnétique.

En fonctionnement, le défilement de la zone active 16 de la partie active 14 qui forme un anneau multipolaire devant le capteur 7 permet à celui-ci de détecter une variation du champ magnétique, qu'il est capable de transformer en un signal électrique proportionnel à la vitesse de rotation de la bague intérieure tournante 3 du palier à roulement 1. Lorsque l'on atteint de hautes vitesses, la partie active 14 est soumise à une accélération radiale dirigée vers l'extérieur, due à la force centrifuge, notamment au niveau des particules magnétiques qui sont plus denses que le liant. Les éléments annulaires 15 grâce à leur partie cylindrique 15b peuvent reprendre les efforts radiaux internes générés dans la partie active 14 et éviter la formation de contraintes de traction excessives qui provoqueraient la fissuration et l'éclatement du plasto-aimant.

On évite d'autre part tout risque de décollement de la partie active 14 de son support 13.

En cas d'échauffement, les éléments annulaires 15 se déforment moins que la partie active 14 en raison de leur faible coefficient de dilatation, ce qui leur permet, là encore, d'éviter une déformation trop importante de ladite partie active 14 et de reprendre les efforts radiaux internes comme précédemment. De plus, on limite ainsi les risques de décollement de la partie active 14 par rapport à son support 13 qui seraient dus à une dilatation différentielle excessive sous l'effet d'une élévation de température. En cas de dilatation de la bague intérieure 3, la partie tubulaire 13a du support 13 pourra se déformer mais cette déformation se transmettra peu à la partie active 14 en raison de la rigidité radiale offerte par les deux parties radiales 13b et 13c. Il en est de même lors de l'emmanchement de la partie tubulaire 13a sur la bague intérieure 3.

Le codeur 8 illustré sur la figure 3 est relativement semblable à celui de la figure 2, à ceci près qu'il ne comprend qu'un seul élément annulaire 15 d'un côté et de l'autre côté un élément 17 de renforcement et de support qui remplit les fonctions du support et d'un des éléments annulaires du mode de réalisation précédent. L'élément 17 comprend une première portion tubulaire 17a destinée à être emmanchée sur la bague intérieure d'un roulement, une première portion radiale 17b qui permet d'éviter la transmission de la déformation de la première partie tubulaire 17a à la partie active 14, une deuxième portion tubulaire 17c qui s'étend à partir de la première portion axiale 17b vers l'intérieur du roulement et est en contact avec l'alésage de la partie active 14, une deuxième portion radiale 17d équivalente à la portion radiale 15a du mode de réalisation précédent, et une troisième portion tubulaire 17e équivalente à la portion cylindrique 15b du mode de réalisation précédent. Ce type de codeur est encore plus simple à fabriquer, notamment par surmoulage, dans la mesure où le codeur ne comprend que deux pièces métalliques qu'il convient bien entendu de réaliser en matériau amagnétique.

Sur la figure 4, les références des éléments semblables à ceux des figures précédentes ont été augmentées du nombre 10. Le codeur 18 comprend un support 23 relativement épais et à section en T. Le support 23 est prévu pour être emmanché sur une portée d'une bague intérieure de roulement. Sur la surface extérieure cylindrique 23a du support 23 est prévue une couche 28 réalisée en matériau élastomère de grande élasticité et pourvue à ses extrémités axiales de deux nervures 28a s'étendant radialement vers l'extérieur. La partie active 24 du codeur 18 est montée autour de la couche 28 et est retenue axialement par rapport à celle-ci grâce aux nervures 28a. Le codeur 18 comprend également deux éléments annulaires 25 à section sensiblement rectangulaire montés de chaque côté de la zone active 26 et affleurant celle-ci. Les éléments annulaires 25 affleurent également les surfaces radiales latérales 24a et 24b de la partie active 24.

Ce mode de réalisation permet d'obtenir un codeur 18 particulièrement compact, pourvu d'éléments annulaires 25 d'une grande simplicité et conservant les mêmes qualités de tenue mécanique et en température des modes de réalisation précédents grâce à la couche élastique 28 qui, lors d'une déformation du support 23, évite de transmettre cette déformation à la partie active 24 en générant dans cette dernière des contraintes de traction.

Grâce à l'invention, on dispose ainsi d'un codeur particulièrement fiable et délivrant en permanence un signal de qualité.

Les éléments annulaires de renforcement permettent au codeur d'être emmanché sur un élément tournant et d'opérer à haute vitesse en limitant les contraintes internes de traction dans la partie active.

Même en cas de fissuration accidentelle de la partie active formant l'anneau multipolaire, les éléments annulaires de renforcement évitent l'éclatement de la partie active sous l'effet de la force centrifuge et ladite partie active continue à délivrer son signal magnétique. Les éléments annulaires de renforcement étant réalisés en matériau amagnétique et laissant libre la zone active du codeur, ne viennent pas perturber le signal. Le codeur suivant l'invention s'accomode en outre des problèmes de température, les éléments annulaires de renforcement permettant de limiter les déformations de la partie active du codeur à haute température et de réduire les effets néfastes de la dilatation différentielle entre la partie active du codeur et son support.

## Revendications

1. Dispositif de codeur pour capteur de vitesse de rotation d'un organe tournant d'un palier monté sur un organe non tournant dudit palier, du type comprenant un capteur (7) solidaire d'un élément fixe par rapport à l'organe non tournant et devant lequel défile en rotation et avec un faible entrefer un élément formant rotor muni d'un codeur (8) magnétique capable de produire dans le capteur un signal périodique de fréquence proportionnelle à la vitesse de rotation de l'élément rotor, ledit codeur comprenant une partie active (14) annulaire réalisée avec un plasto-aimant et pourvue d'une zone active (16) disposée pour défiler en regard du capteur, **caractérisé par le fait qu'**il comprend une partie de renforcement composée de deux éléments annulaires (15) disposés en contact avec la partie active, de chaque côté de la zone active, et capables de reprendre les efforts radiaux internes générés dans la partie active au moyen d'une portion cylindrique.

2. Dispositif selon la revendication 1, **caractérisé par le fait que** chaque élément annulaire (15) s'étend entre la zone active et une face radiale du codeur, la zone active étant cylindrique.

3. Dispositif selon la revendication 1 ou 2, **caractérisé par le fait que** les éléments annulaires (15) affleurent la zone active.

4. Dispositif selon l'une quelconque des revendications précédentes, **caractérisé par le fait que** les éléments annulaires (15) sont réalisés en matériau amagnétique et possèdent un module d'élasticité élevé et un coefficient de dilatation faible par rapport à ceux de la partie active du codeur.

5. Dispositif selon l'une quelconque des revendications précédentes, **caractérisé par le fait que** les éléments annulaires (15) sont en forme de coupelle à section en L.

6. Dispositif selon l'une quelconque des revendications 1 à 4, **caractérisé par le fait que** les éléments annulaires (25) ont une section sensiblement rectangulaire.

7. Dispositif selon l'une quelconque des revendications précédentes, **caractérisé par le fait qu'**il comprend un support (17) destiné à être emmanché sur une portée de l'élément formant rotor, ledit support étant monobloc avec l'un des éléments annulaires (15).

8. Dispositif selon l'une quelconque des revendications précédentes, **caractérisé par le fait que** la partie active du codeur est surmoulée sur les éléments annulaires (15).

9. Dispositif selon l'une quelconque des revendications 1 à 7, **caractérisé par le fait que** les éléments annulaires (15) sont collés sur la partie active du codeur.

10. Dispositif selon l'une quelconque des revendications 1 à 7, **caractérisé par le fait que** les éléments annulaires (15) sont emmanchés sur la partie active du codeur.

11. Palier à roulement équipé d'un codeur pour dispositif de détection de la vitesse de rotation de sa bague tournante par rapport à sa bague non tournante, selon l'une quelconque des revendications précédentes.

## Patentansprüche

1. Impulserzeugungseinrichtung für einen Drehzahlgeber eines umlaufenden Teils eines Lagers, das auf einem stillstehenden Teil des Lagers gelagert ist, von der Bauart mit einem Aufnehmer (7), der an einem Element befestigt ist, das in Bezug auf das stillstehende Teil fest ist und vor dem drehend und mit einem geringen Spalt ein einen Rotor bildendes Element vorbeiläuft, das mit einem magnetischen Impulsgeber (8) versehen ist, der in der Lage ist, in dem Aufnehmer ein periodisches Signal zu erzeugen, dessen Frequenz der Drehzahl des Rotorelementes proportional ist, wobei der Impulsgeber einen ringförmigen aktiven Teil (14) aufweist, der aus Kunststoff mit magnetischen Partikeln ausgeführt ist und der mit einem aktiven Bereich (16) versehen ist, der derart angeordnet ist, um drehend vor dem Aufnehmer vorbeizulaufen, **dadurch gekennzeichnet, dass** sie einen Versteifungsteil aufweist, zu dem zwei ringförmige Elemente (15) gehören, die mit dem aktiven Teil in Berührung stehen, von beiden Seiten des aktiven Bereichs angeordnet und in der Lage sind, mit Hilfe eines zylindrischen Abschnitts die in dem aktiven Bereich erzeugten inneren Radialkräfte aufzunehmen.

2. Einrichtung nach Anspruch 1, **dadurch gekennzeichnet, dass** sich jedes ringförmige Element (15) zwischen dem aktiven Bereich und einer radialen Stirnfläche des Impulsgebers erstreckt, wobei der aktive Bereich zylindrisch ist.

3. Einrichtung nach Anspruch 1 oder 2, **dadurch gekennzeichnet, dass** die ringförmigen Elemente (15) mit dem aktiven Bereich auf gleicher Höhe liegen.

4. Einrichtung nach einem der vorhergehenden Ansprüche, **dadurch gekennzeichnet, dass** die ringförmigen Elemente (15) aus einem nichtmagnetischen Material hergestellt sind und im Vergleich zu dem aktiven Teil des Impulsgebers einen höheren Elastizitätsmodul und einen niedrigen Ausdehnungskoeffizienten aufweisen.

5. Einrichtung nach einem der vorhergehenden Ansprüche, **dadurch gekennzeichnet, dass** die ringförmigen Elemente (15) die Gestalt einer Schale mit L-förmigem Querschnitt aufweisen.

6. Einrichtung nach einem der Ansprüche 1 bis 4, **dadurch gekennzeichnet, dass** die ringförmigen Elemente (25) einen im Wesentlichen rechteckigen Querschnitt aufweisen.

7. Einrichtung nach einem der vorhergehenden Ansprüche, **dadurch gekennzeichnet, dass** sie einen Träger (17) aufweist, der dazu vorgesehen ist, an einer Lagerfläche des einen Rotor bildenden Elementes befestigt zu werden, wobei der Träger mit einem der ringförmigen Elemente (15) einstückig ausgebildet ist.

8. Einrichtung nach einem der vorhergehenden Ansprüche, **dadurch gekennzeichnet, dass** der aktive Teil des Impulsgebers auf den ringförmigen Elementen (15) aufgespritzt ist.

9. Einrichtung nach einem der Ansprüche 1 bis 7, **dadurch gekennzeichnet, dass** die ringförmigen Elemente (15) auf dem aktiven Teil des Impulsgebers aufgeklebt sind.

10. Einrichtung nach einem der Ansprüche 1 bis 7, **dadurch gekennzeichnet, dass** die ringförmigen Elemente (15) auf dem aktiven Teil des Impulsgebers aufgepresst sind.

11. Wälzlager, das mit einer Impulserzeugungseinrichtung für einen Drehzahlsensor zur Erfassung der Drehzahl eines umlaufenden Rings bezüglich seines stillstehenden Rings versehen ist, wobei die Impulserzeugungseinrichtung nach einem der vorhergehenden Ansprüche ausgeführt ist.

## Claims

1. Encoder device for a sensor for detecting the rotational speed of a rotating member of a bearing mounted on a non-rotating member of the said bearing, of the type comprising a sensor (7) secured to an element that is stationary with respect to the non-rotating member and past which an element forming a rotor rotates with a small air gap, which element is equipped with a magnetic encoder (8) capable of producing in the sensor a periodic signal of frequency proportional to the rotational speed of the rotor element, the said encoder comprising an annular active part (14) made using a plasto-magnet and provided with an active region (16) arranged to travel past the sensor, **characterized in that** it comprises a reinforcing part composed of two annular elements (15) arranged in contact with the active part, one on either side of the active region, and capable of taking up the internal radial loadings generated in the active part by means of a cylindrical portion.

2. Device according to Claim 1, **characterized in that** each annular element (15) extends between the active region and a radial face of the encoder, the active region being cylindrical.

3. Device according to Claim 1 or 2, **characterized in that** the annular elements (15) lie flush with the active region.

4. Device according to any one of the preceding claims, **characterized in that** the annular elements (15) are made of non-magnetic material and have an elastic modulus which is high and a coefficient of expansion which is low compared with those of the active part of the encoder.

5. Device according to any one of the preceding claims, **characterized in that** the annular elements (15) are in the shape of a dish with a L-shaped cross section.

6. Device according to any one of Claims 1 to 4, **characterized in that** the annular elements (25) have a more or less rectangular cross section.

7. Device according to any one of the preceding claims, **characterized in that** it comprises a support (17) intended to be push-fitted onto a bearing surface of the element forming the rotor, the said support being integral with one of the annular elements (15).

8. Device according to any one of the preceding claims, **characterized in that** the active part of the encoder is overmoulded onto the annular elements (15).

9. Device according to any one of Claims 1 to 7, **characterized in that** the annular elements (15) are bonded to the active part of the encoder.

10. Device according to any one of Claims 1 to 7, **characterized in that** the annular elements (15) are push-fitted onto the active part of the encoder.

11. Rolling-contact bearing equipped with an encoder for a device for detecting the rotational speed of its rotating race with respect to its non-rotating race, according to any one of the preceding claims.
